(19) Europäisches Patentamt / European Patent Office / Office européen des brevets

(11) **EP 2 711 203 B1**

## (12) EUROPEAN PATENT SPECIFICATION

(45) Date of publication and mention
of the grant of the patent:
**09.12.2015 Bulletin 2015/50**

(51) Int Cl.:
***B60C 13/00*** *(2006.01)*        ***B60C 13/02*** *(2006.01)*

(21) Application number: **13197717.5**

(22) Date of filing: **28.04.2010**

(54) **Pneumatic tire**

Luftreifen

Pneu

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.04.2009 JP 2009109150**

(43) Date of publication of application:
**26.03.2014 Bulletin 2014/13**

(62) Document number(s) of the earlier application(s) in
accordance with Art. 76 EPC:
**10769789.8 / 2 425 992**

(73) Proprietor: **Bridgestone Corporation
Tokyo 104-8340 (JP)**

(72) Inventors:
• **Kuroishi, Kazuya
Kodaira-shi, 187-8531 (JP)**
• **Toyoda, Kenji
Kodaira-shi, 187-8531 (JP)**

(74) Representative: **Oxley, Robin John George et al
Marks & Clerk LLP
90 Long Acre
London WC2E 9RA (GB)**

(56) References cited:
**WO-A1-2009/029088      GB-A- 178 496
JP-A- H11 321 243**

**Description**

TECHNICAL FIELD

The present invention relates to a pneumatic tire having projections for turbulent flow generation extending along a tire radial direction, on a tire side portion.

BACKGROUND ART

Conventionally, in a pneumatic tire installed in a vehicle, particularly, a pneumatic tire for heavy loads installed in a construction vehicle such as a dump truck, in order to prevent a rise in temperature of the tire side portion due to the running of the construction vehicle, a structure in which fin-shaped projections for turbulent flow generation extending along the tire radial direction are provided on the tire side portion is used (For example, Patent Document 1).

The air flowing along the tire side portion climbs over the projections for turbulent flow generation, and when the air whose flow has been disturbed adheres again to the tire side portion, the heat dissipation of the tire side portion is promoted.

PRIOR ART DOCUMENT

PATENT DOCUMENT

Patent Document 1: WO 2007-032405 (Pages 6 to 7, Fig. 2)

Reference is also made to WO2009/029088, GB178496 and JP 11-321243.

SUMMARY OF THE INVENTION

Because the size of the pneumatic tire for heavy load is extremely large as compared to a general pneumatic tire, the length of the projections for turbulent flow generation extending along the tire radial direction also becomes long in correspondence to the vast tire side portion.

Furthermore, in the case of a construction vehicle that runs on an irregular ground and dirty road surface on many occasions, the oil content oozing out from the strut-type shock absorbers that repeat an intense reciprocating motion, and the oil content on the road get dispersed and may adhere to the tire side portion. If the oil content thus adheres to the projections for turbulent flow generation, then the projections for turbulent flow generation which are formed from rubber swell up, and get deformed into a wavy shape thereby posing a problem. When the projections for turbulent flow generation get deformed into a wavy shape, the heat dissipation effect of the tire side portion declines, and at the same time, the quality of external appearance also declines.

Thus, an object of the present invention is to provide a pneumatic tire that prevents the deformation of the projections for turbulent flow generation due to the oil content dispersed from outside while maintaining the heat dissipation effect of the tire side portion in cases where projections for turbulent flow generation are provided on the tire side portion.

The present invention provides a pneumatic tire comprising turbulent generating projections extending along a tire radial direction, on a tire side portion positioned between a tread and a bead, wherein the turbulent generating projections include at least a first projection, a second projection separate from the first projection, and a third projection separate from the first projection and the second projection, the first projection and the third projection are provided at the same position in a tire circumferential direction, and disposed separately having a predetermined gap, the second projection is provided at a different position from the first projection and the third projection in the tire circumferential direction, and the end portion inside in the tire radial direction of the first projection overlaps the end portion outside in the tire radial direction of the second projection in the tire radial direction, and the end portion outside in the tire radial direction of the third projection overlaps the end portion inside in the tire radial direction of the second projection in the tire radial direction, wherein when a pitch of adjoining turbulent generating projections is defined as P, a height of the adjoining turbulent generating projections is defined as h, and a width in the tire circumferential direction of the adjoining turbulent generating projections is defined as W, a relation of $1.0 \le P/h \le 50.0$ and $1.0 \le (P-W)/W \le 100.0$ is satisfied.

Preferably, the second projection is adjacent to the first projection in the tire circumferential direction, and a predetermined gap (width G) is formed between the first projection and the second projection. Preferably, the second projection is adjacent to the third projection in the tire circumferential direction, and a predetermined gap is formed between the third projection and the second projection.

Preferably, the predetermined gap is equal to or less than a width (width W) of the turbulent generating projection along the tire circumferential direction.

Preferably, a width (width W) of the turbulent generating projection along the tire circumferential direction is 2 mm or more and 10 mm or less.

Preferably, a height (height h) of the turbulent generating projection is 3 mm or more and 25 mm or less.

Preferably, in a state when the pneumatic tire is assembled in a rim wheel (rim wheel 200), a distance (distance d) from an upper end (upper end 210a) of a rim flange of the rim wheel up to a lower end (lower end 100a) of the turbulent generating projection is 50 mm or more and 250 mm or less.

Preferably, the height of the turbulent generating projection is 10 mm or more and 25 mm or less. Preferably, when L denotes a length of the turbulent generating projection along the tire radial direction E denotes a Young's modulus of a forming material that forms the turbulent generating projection, and I denotes a second moment of area of a cross section of the turbulent generating projection perpendicularly intersecting in the direction in which the turbulent generating projection is extending, the turbulent generating projection satisfies the relationship of $L^2 \leq 3.5 \times E \times I$.

According to a characteristic of the present invention, it is possible to provide a pneumatic tire that prevents the deformation of the projections for turbulent flow generation due to the oil content dispersed from outside while maintaining the heat dissipation effect of the tire side portion in cases where projections for turbulent flow generation are provided on the tire side portion.

BRIEF DESCRIPTION OF THE DRAWINGS

[Fig. 1] Fig. 1 is a view of a sidewall surface at the side of the tire side portion in a pneumatic tire according to an embodiment of the present invention.

[Fig. 2] Fig. 2 is a partial exploded perspective view showing the pneumatic tire according to the embodiment of the present invention.

[Fig. 3] Fig. 3 is a cross-sectional view showing the pneumatic tire according to the embodiment of the present invention.

[Fig. 4] Fig. 4 is a partial exploded perspective view showing a turbulent generating projection of the pneumatic tire according to the embodiment of the present invention.

[Fig. 5] Fig. 5 is a front view showing the turbulent generating projection of the pneumatic tire according to the embodiment of the present invention.

[Fig. 6] Fig. 6 is a front view showing a turbulent generating projection of a pneumatic tire which is not according to the present invention.

[Fig. 7] Fig. 7 is a front view showing the turbulent generating projection of the pneumatic tire according to another embodiment of the present invention.

MODES FOR CARRYING OUT THE INVENTION

Next, an embodiment of a pneumatic tire according to the present invention is explained with reference to drawings. In the following description of the drawings, the same or similar reference numerals are used to designate the same or similar parts. It will be appreciated that the drawings are schematically shown and the ratio and the like of each dimension are different from the real ones.

Therefore, detailed dimension and the like should be determined considering the following description. Of course, among the drawings, the dimensional relationship and the ratio are different.

The pneumatic tire according to the present invention will be explained. Specifically, (1) Configuration of pneumatic tire, (2) Shape of turbulent generating projection, (3) Comparative evaluation, (4) Operation and effect, and (5) Other embodiments will be explained.

(1) Configuration of pneumatic tire

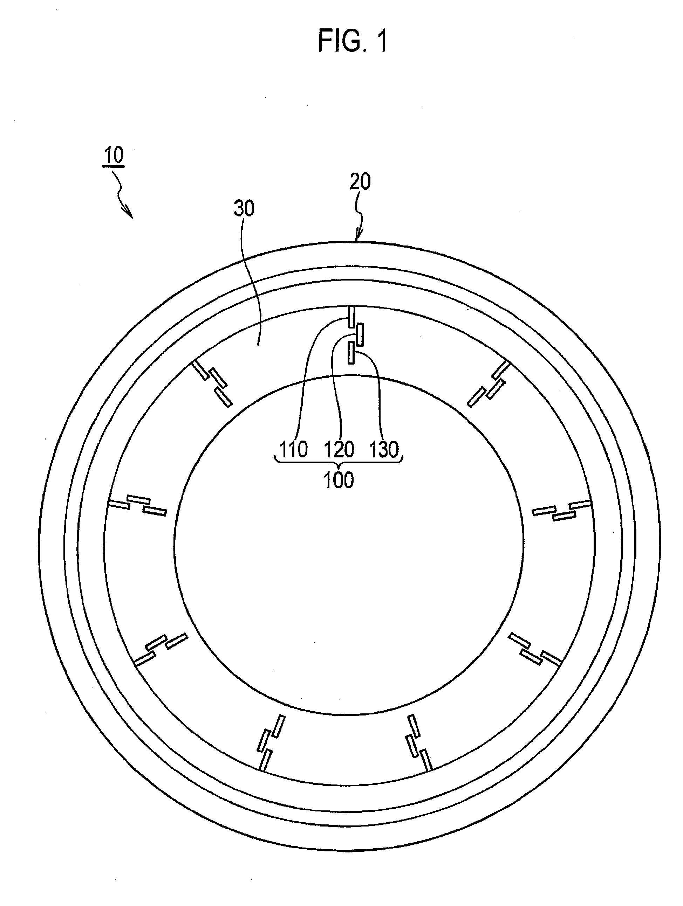

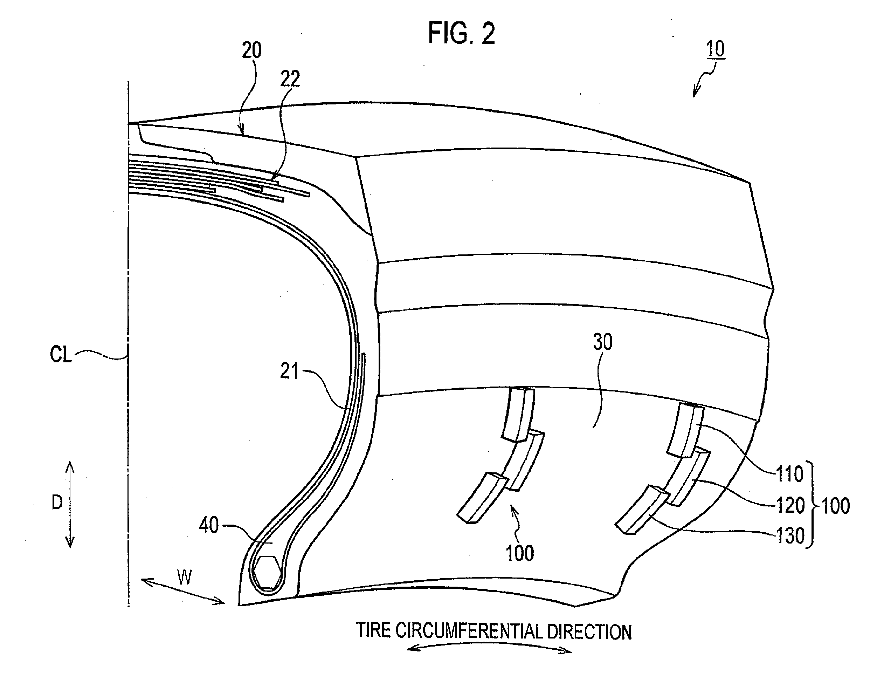

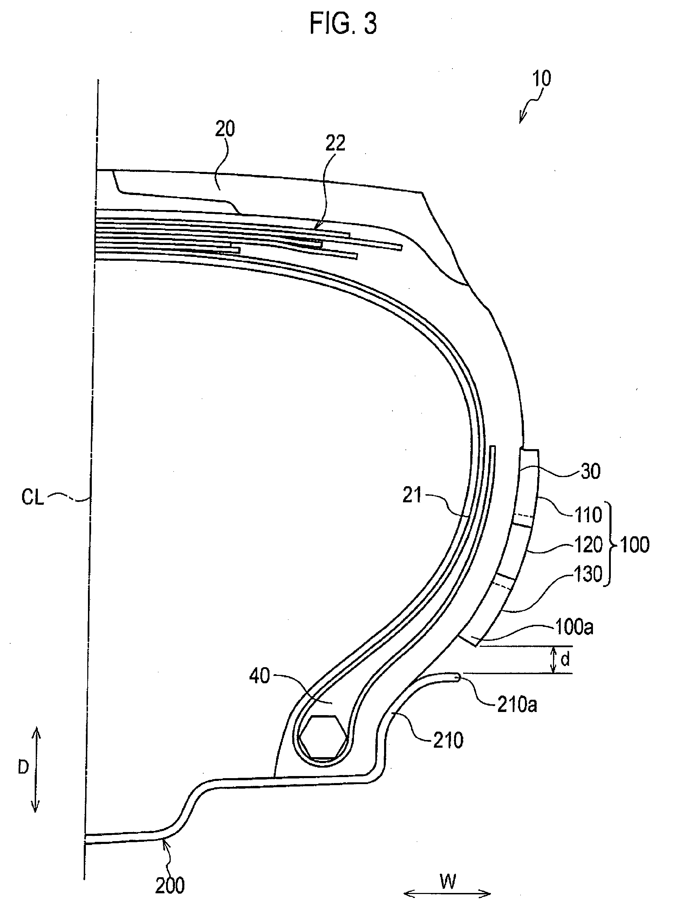

A pneumatic tire 10 according to the present invention is a pneumatic tire for heavy loads, which is installed in construction vehicles such as a dump truck. The configuration of the pneumatic tire 10 is explained with reference to drawings. Fig. 1 is a view of a sidewall surface at the side of a tire side portion 30 in the pneumatic tire 10 according to the embodiment of the present invention. Fig. 2 is a partial exploded perspective view showing the pneumatic tire 10 according to the embodiment of the present invention. Fig. 3 is a cross-sectional view showing the pneumatic tire 10 according to the embodiment of the present invention.

As shown in Fig. 1, the pneumatic tire 10 has projections 100 for turbulent flow generation extending along the tire radial direction on the tire side portion 30 positioned between a tread 20 grounded on a road surface during running and a bead. It is noted that although the pneumatic tire 10 is filled with air at a predetermined pressure, an inert gas such as nitrogen may also be filled in place of air.

A projection 100 for turbulent flow generation includes at least a first projection 110 and a second projection 120 separate from the first projection 110. Furthermore, the projection 100 for turbulent flow generation includes a third projection 130 separate from the first projection 110 and the second projection 120.

As shown in Fig. 2, the pneumatic tire 10 has a carcass 21 that forms the framework of the pneumatic tire 10, a bead 40 that fits the carcass 21 into a rim flange 210 (described later), and a belt layer 22 arranged outside of the tire radial direction of the carcass 21.

The carcass 21 is configured by a carcass cord, and a layer made from rubber covering the carcass cord. The belt layer 22 is configured such that an organic fiber cord is impregnated with a rubber component. Furthermore, the belt layer 22 is configured by a plurality of layers, and each layer is aligned along a tire radial direction D. A bead 40 is arranged along a tire circumferential direction, and is provided on both sides of the tread widthwise direction W via a tire equatorial line CL.

The second projection 120 is provided at a different position from the first projection 110 in the tire circumferential direction. The third projection 130 is provided at the same position as the first projection 110 in the tire circumferential direction. Specifically, the second projection 120 is adjacent to the first projection 110 and the third projection 130 in the tire circumferential direction, and a predetermined gap is formed between the first projection 110 and the second projection 120. Similarly, a predetermined gap is formed between the third projection 130 and the second projection 120.

As shown in Fig. 3, in a state when the pneumatic tire 10 is assembled in a rim wheel 200, a distance d from an upper end 210a of a rim flange 210 of the rim wheel 200 up to the lower end 100a of the projection 100 for turbulent flow generation is 50 mm or more and 250 mm or less. It is noted that the state when the pneumatic tire 10 is assembled in the rim wheel 200 refers to the state when the pneumatic tire 10 is assembled in a standard rim described in ETRTO at an air pressure corresponding to the maximum load described in ETRTO. Furthermore, the upper end 210a of the rim flange 210 indicates an end portion outside of the tire radial direction of the rim flange 210. Furthermore, the lower end 100a of the projection 100 for turbulent flow generation indicates an end portion inside of the tire radial direction of the turbulent generating projection configuring the projection 100 for turbulent flow generation. That is, in the present embodiment, the lower end 100a of the projection 100 for turbulent flow generation indicates the end portion inside of the tire radial direction of the third projection 130.

(2) Shape of turbulent generating projection

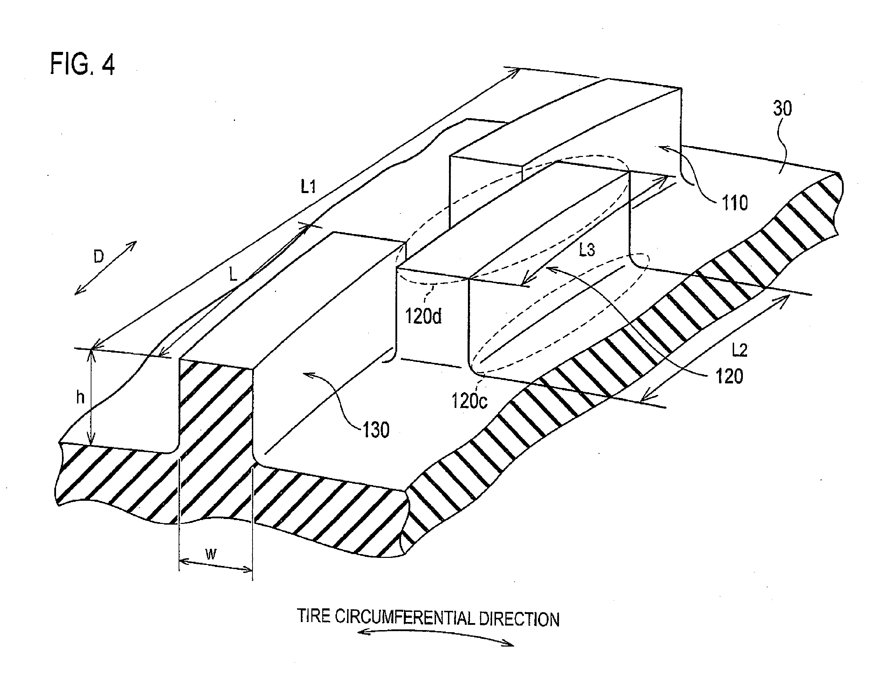

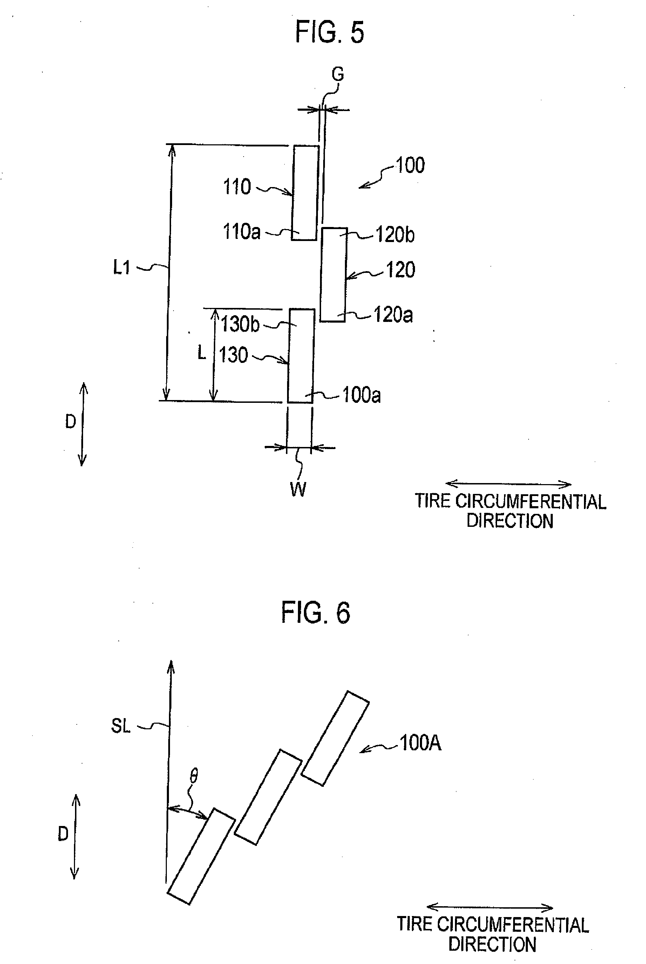

The shape of the projection 100 for turbulent flow generation of the pneumatic tire 10 according to the present embodiment is explained with reference to drawings. Fig. 4 is a partial exploded perspective view showing the projection 100 for turbulent flow generation of the pneumatic tire 10 according to the embodiment of the present invention, Fig. 5 is a front view showing the projection 100 for turbulent flow generation of the pneumatic tire 10 according to the embodiment of the present invention.

As shown in Figs. 4 and 5, the inside end portion 110a, which is the end portion inside of the tire radial direction of the first projection 110 overlaps the outside end portion 120b, which is the end portion outside of the tire radial direction of the second projection 120, in the tire radial direction D. Similarly, the outside end portion 130b, which is the end portion outside of the tire radial direction of the third projection 130 overlaps the inside end portion 120a, which is the end portion inside of the tire radial direction of the second projection 120, in the tire radial direction D.

The projection 100 for turbulent flow generation has a width W along the tire circumferential direction, and a length L and height h along the tire radial direction D. Specifically, each of the first projection 110, the second projection 120, and the third projection 130 included in the projection 100 for turbulent flow generation has the width W, length L, and height h. Therefore, the details of the width W, length L, and height h of the projection 100 for turbulent flow generation that are described below are common for the first projection 110, the second projection 120, and the third projection 130. The width W along the tire circumferential direction of the projection 100 for turbulent flow generation is 2 mm or more and 10 mm or less. The height h of the projection 100 for turbulent flow generation is 3 mm or more and 25 mm or less. Furthermore, the length of a region along the tire radial direction D in which the projection 100 for turbulent flow generation is positioned is set to length L1. Specifically, the length L1 indicates the length from the end portion inside of the tire radial direction of the third projection 130 up to the end portion outside of the tire radial direction of the first projection 110.

The height h of the projection 100 for turbulent flow generation can be set to 10 mm or more and 25 mm or less. Furthermore, more preferably, the height h of the projection 100 for turbulent flow generation is 15 mm or more and 25 mm or less.

When a length L denotes the length along the tire radial direction D of the projection 100 for turbulent flow generation, E denotes the Young's modulus of a forming material that forms the projection 100 for turbulent flow generation, and I denotes the second moment of area of the cross section of the projection 100 for turbulent flow generation perpendicularly intersecting in the direction in which the projection 100 for turbulent flow generation is extending, the projection 100 for turbulent flow generation satisfies the relationship of Equation 1.

[Equation 1]

$$L^2 \leq 3.5 \times E \times I$$

Note that the Equation 1 is drawn from Equation 2 that finds out the minimum load P at which bending occurs. In the present invention, the value of P is assumed to be constant. That is, by satisfying the relationship of the Equation 1, the length L becomes the length in which deformation due to bending does not occur to the projection 100 for turbulent flow generation.

[Equation 2]

$$P = EI(\pi/L)^2$$

Furthermore, the shape of the cross section of the projection 100 for turbulent flow generation perpendicularly intersecting in the direction in which the projection 100 for turbulent flow generation according to the present embodiment is extending is rectangular, and therefore, the second moment of area is calculated according to Equation 3.

[Equation 3]

$$I = w \times h^3/12$$

Thus, it can also be said that the length L of the projection 100 for turbulent flow generation is calculated by the relational expression between the width W and height h of the projection 100 for turbulent flow generation.

Hereinafter, the length L of the projection 100 for turbulent flow generation is explained in further detail by using the second projection 120 as an example. Note that this point is also common to the first projection 110 and the third projection 130, and therefore, the description concerning the length L of the first projection 110 and the third projection 130 is omitted. The length L along the tire radial direction D of the end portion 120c, which is the end portion at the side of the tire side portion 30 of the second projection 120 and is a fixed end is length L2, and the length L along the tire radial direction D of the end portion 120d which is the end portion at the apex side of the second projection 120 and is a free end is length L3.

Conventionally, as for the length L3' (corresponding to L3 of the present invention) at the apex side of a turbulent generating projection, when the oil content oozing out from the strut-type shock absorbers that repeat an intense reciprocating motion, and the oil content on the road got dispersed and adhered to the turbulent generating projection, it swelled up, and the length L3' extended up to length L3" (not shown in the figure). On the other hand, because the length L2' (corresponding to L2 of the present invention) at the side of the tire side portion of the turbulent generating projection is the length at the fixed end, the turbulent generating projection did not swell up even when the oil content adhered to it, and the length remained as length L2'. That is, due to the occurrence of a difference between the length L2' and the length L3", the turbulent generating projection got deformed into a wavy shape.

According to the present invention, because the length L3 satisfies the relationship of the Equation 1 although the end portion 120d of the second projection 120 is a free end at the apex side of the second projection 120, no deformation occurs in the end portion 120d of the second projection 120 even when the oil content oozing out from the strut-type shock absorbers that repeat an intense reciprocating motion, and the oil content on the road gets dispersed and adheres to the turbulent generating projection.

The width G along the tire circumferential direction of the predetermined gap formed between the first projection 110 and the second projection 120 is equal to or less than the width W along the tire circumferential direction of the projection 100 for turbulent flow generation.

The projection 100 for turbulent flow generation satisfies the relationships of $1.0 \leq P/h \leq 50.0$ and $1.0 \leq (P-w)/w \leq 100.0$. Note that P indicates the pitch of projections 100 for turbulent flow generation, which are adjacent in the tire circumferential direction. Specifically, as for the center line of the projections 100 for turbulent flow generation along the tire circumferential direction, p indicates the distance between the center lines of projections 100 for turbulent flow generation that are adjacent in the tire circumferential direction.

A slant angle θa with respect to a radial direction of the projection 100 for turbulent flow generation satisfies the relationship of $-30° \leq \theta a \leq 30°$.

(3) Comparative evaluation

Subsequently, in order to further clarify the effect of the present invention, a comparative evaluation will be described in which pneumatic tires according to comparative examples and examples below were used. Specifically, (3.1) Evaluation method and (3.2) Evaluation result will be described. It is noted that the present invention is not limited to these examples in any way.

(3.1) Evaluation method

The pneumatic tires according to comparative examples 1 to 3 and examples 1 to 6 were used and (3.1.1) heat dissipation effect evaluation was conducted. The pneumatic tires according to comparative examples 1 to 3 and examples 1 to 6 used in the comparative evaluation are explained specifically. Data items relating to the pneumatic tire were measured under the following condition:
- Tire size: 55/80R63
- Rim size: Standard rim described in ETRTO
- Inner pressure condition: Air pressure corresponding to the maximum load described in ETRTO
- Load condition: Maximum load described in ETRTO (maximum load capability)
- Vehicle type: Dump track (320 ton class)

Each pneumatic tire differs in the shape and arrangement of the projections for turbulent flow generation, and the other configurations are similar to those of the pneumatic tire 10 of the present embodiment. Hereinafter, the characteristics of each pneumatic tire will be explained.

The pneumatic tire according to comparative example 1 differs from the pneumatic tire 10 in that it does not have a turbulent generating projection.

As compared to the pneumatic tire 10, the pneumatic tire according to comparative example 2 has a turbulent generating projection with a vast length in the tire radial direction, and does not have a plurality of projections for turbulent flow generation in the tire radial direction as in the case of the pneumatic tire 10.

The pneumatic tire according to comparative example 3 has one turbulent generating projection in the tire radial direction such that it satisfies $L^2 \leq 3.5 \times E \times I$ as in the pneumatic tire 10.

In the pneumatic tire according to examples 1 to 6, the first projection 110 and the second projection 120 of the pneumatic tire 10 are provided alternately along the tire radial direction. The Young's modulus E of each of the projections for turbulent flow generation of the pneumatic tire according to examples 1 to 6 is 0.35 kg/mm$^2$, and the projections for turbulent flow generation satisfy $L^2 \leq 3.5 \times E \times I$ of the pneumatic tire 10. Furthermore, the length L1 (length of the region in which the projections for turbulent flow generation are positioned along the tire radial direction) of the pneumatic tire according to the examples is 240 mm.

(3.1.1) Heat dissipation effect evaluation

Evaluation method: Pinholes positioned at an interval of 10 mm along the tire radial direction of each pneumatic tire are formed at six locations along the tire circumferential direction. Furthermore, in the tread widthwise direction, a pinhole was formed outside of the tread widthwise direction at approximately 5 mm from the carcass. Each pneumatic tire was installed in the front wheel of the vehicle, was made to run on a dry road surface at 15 km/h for 24 hours, the temperature of the pneumatic tire after running was measured with a thermocouple, and the average value was calculated.

It is noted that with reference to the temperature of the pneumatic tire according to the comparative example 1, it was determined from the measurement results that the heat dissipation effect existed when the temperature of the pinholes at the same position in each pneumatic tire declined.

(3.2) Evaluation results

The evaluation results of the pneumatic tire according to the comparative examples and examples will be described with reference to Table 1.

[Table 1]

| | | Com. Ex. 1 | Com. Ex. 2 | Com. Ex. 3 | Ex. 1 | Ex. 2 | Ex. 3 | Ex. 4 | Ex. 5 | Ex. 6 |
|---|---|---|---|---|---|---|---|---|---|---|
| Shape of turbulent generating projection | Projection height (h) | - | 15mm | 15mm | 15mm | 10mm | 25mm | 16mm | 16mm | 20mm |
| | Projection width (W) | - | 5mm | 5mm | 5mm | 2.5mm | 7mm | 5mm | 10mm | 5mm |
| | Slant angle with respect to radial direction | - | 0° | 0° | 0° | 0° | 0° | 0° | 0° | 0° |
| | Projection length (L) | - | 200mm | 37mm | 37mm | 15mm | 100mm | 45mm | 60mm | 40mm |
| | p/h | - | | 6 | 6 | 9 | 3.6 | 9 | 9 | 6 |
| Range of tire radial direction where heat dissipation effect existed in tire side portion | | - | 240mm | 80mm | 240mm | 240mm | 240mm | 240mm | 240mm | 240mm |

As for the pneumatic tire according to examples 1 to 6, the heat dissipation effect improved as compared to the pneumatic tire according to comparative examples 1 and 3. Furthermore, in the pneumatic tire according to the examples, it was possible to secure the same heat dissipation effect as the pneumatic tire according to comparative example 2.

(4) Operation and Effect

As described above, according to the pneumatic tire 10 of the present embodiment, the length L of the projection 100 for turbulent flow generation along the tire radial direction D satisfies the Equation 1. That is, the length L becomes the length in which deformation due to bending of the projection 100 for turbulent flow generation does not occur.

Conventionally, when the oil content adheres to the projections for turbulent flow generation, the amount of deformation of the projections for turbulent flow generation having a vast length along the tire radial direction D was large, and the projections got deformed into a wavy shape thereby posing a problem. By contrast, according to the pneumatic tire 10 of the present embodiment, even when the oil content adheres to the projection 100 for turbulent flow generation, the deformation due to the bending of the projection 100 for turbulent flow generation is controlled below the predetermined amount.

Thus, a pneumatic tire 10 that prevents the deformation of the projection 100 for turbulent flow generation due to the oil content dispersed from outside while maintaining the heat dissipation effect of the tire side portion 30 in cases where projections for turbulent flow generation are provided on the tire side portion 30 can be provided.

Furthermore, according to the present embodiment, although the size of the pneumatic tire is extremely large as compared to a general pneumatic tire, the deformation of the projections 100 for turbulent flow generation can be controlled, and the heat dissipation effect of a vast tire side portion 30 can be secured.

According to the present embodiment, the projection 100 for turbulent flow generation includes at least the first projection 110 and the second projection 120 separate from the first projection 110, and the second projection 120 is provided at a position different from the first projection 110 in the tire circumferential direction. That is, because the projection 100 for turbulent flow generation includes a plurality of projections, the amount of deformation of the projection 100 for turbulent flow generation along the tire radial direction D becomes further less as compared to the conventional turbulent generating projection having a vast length in the tire radial direction D. Furthermore, because the second projection 120 is provided at a different position from the first projection 110 in the tire circumferential direction, a contact between the second projection 120 and the first projection 110 can be prevented in spite of a deformation in the tire radial direction D, and therefore, the deformation of each projection can be controlled further.

Furthermore, the end portion inside of the tire radial direction of the first projection 110 overlaps the end portion outside of the tire radial direction of the second projection 120, in the tire radial direction D. Therefore, the flow of the air flowing along the tire side portion 30 is disturbed when the air climbs over the first projection 110 or the second projection 120. When the air whose flow has been disturbed adheres again to the tire side portion 30, the heat dissipation effect of the tire side portion 30 can be achieved.

According to the present embodiment, the second projection 120 is adjacent to the first projection 110 in the tire circumferential direction, and a predetermined gap (width G) is formed between the first projection 110 and the second projection 120. Therefore, the probability of the air flowing along the tire side portion 30 climbing over the first projection 110 or the second projection 120 becomes higher, That is, by climbing over the first projection 110 or the second projection 120, the heat dissipation effect of the tire side portion 30 can be improved further.

Furthermore, because a predetermined gap (width G) is formed between the first projection 110 and the second projection 120, a contact between the second projection 120 and the first projection 110 can be prevented even when the second projection 120 and the first projection 110 get deformed in the tire radial direction D.

Therefore, the pneumatic tire 10 can further improve the heat dissipation effect of the tire side portion 30 while preventing the deformation of the projection 100 for turbulent flow generation.

According to the present embodiment, because the predetermined gap (width G) is equal to or less than the width W along the tire circumferential direction of the projection 100 for turbulent flow generation, the air flowing along the tire side portion 30 has a high probability of climbing over the first projection 110 or the second projection 120. That is, by climbing over the first projection 110 or the second projection 120, the heat dissipation effect of the tire side portion 30 can be improved further.

According to the present embodiment, because the width W of the projection 100 for turbulent flow generation along the tire circumferential direction is 2 mm or more and 10 mm or less, it can further improve the heat dissipation effect of the tire side portion 30 while maintaining the function as a projection that disturbs the flow of the air flowing along the tire side portion 30. It is noted that if the width W is less than 2 mm, the projection 100 for turbulent flow generation might vibrate as a result of the air flowing along the tire side portion 30. Furthermore, if the width W is more than 10 mm, the storage of heat accumulated in the projection 100 for turbulent flow generation is feared to become large.

According to the present embodiment, because the height h of the projection 100 for turbulent flow generation is 3 mm or more and 25 mm or less, when the projection 100 for turbulent flow generation is installed as a tire for a construction vehicle, the heat dissipation effect of the tire side portion 30 can certainly be secured in the practical velocity range of the tire for construction vehicle.

According to the present embodiment, in a state when the pneumatic tire 10 is assembled in the rim wheel 200, the distance d from the upper end 210a of the rim flange 210 of the rim wheel 200 up to the lower end 100a of the projection 100 for turbulent flow generation is 50 mm or more and 250 mm or less.

When the pneumatic tire 10 is assembled in the rim wheel 200, the projection 100 for turbulent flow generation is feared to get deformed. Furthermore, if an inclination occurs due to a load on the pneumatic tire 10, the projection 100 for turbulent flow generation is feared to get deformed by the rim flange 210. By contrast, when the distance d is 50 mm or more, the deformation of the projection 100 for turbulent flow generation can certainly be prevented. Thus, the occurrence of cracks in the projection 100 for turbulent flow generation as a result of deformation of the projection 100 for turbulent flow generation can also be prevented certainly.

Furthermore, by setting the distance d to 250 mm or less, the projection 100 for turbulent flow generation can sufficiently secure the function as a projection that disturbs the flow of the air flowing along the tire side portion 30.

According to the present embodiment, because the projection 100 for turbulent flow generation satisfies the relationships of 1.0 <= P/h <= 50.0 and 1.0 <= (P-w)/w <= 100.0, it can sufficiently secure the function as a projection that disturbs the flow of the air flowing along the tire side portion 30.

According to the present embodiment, because the slant angle $\theta a$ with respect to the radial direction of the projection 100 for turbulent flow generation satisfies the relationship of $-30° \leq \theta a \leq 30°$, the projection 100 for turbulent flow generation can sufficiently secure the function as a projection that disturbs the flow of the air flowing along the tire side portion 30.

(5) Other Embodiments

So far, the present invention is disclosed through the above embodiments. However, it should not be interpreted that the statements and drawings constituting a part of the present disclosure limit the present invention. From the present disclosure, various alternative embodiments, examples, and operational technologies will become apparent to those skilled in the art.

Fig. 6 is a front view showing a projection 100A for turbulent flow generation of a pneumatic tire which is not according to the present invention.

However, as shown in Fig. 6, the projection 100A for turbulent flow generation may be provided such that a slant angle $\theta$ is formed with respect to a straight line SL along the tire radial direction D.

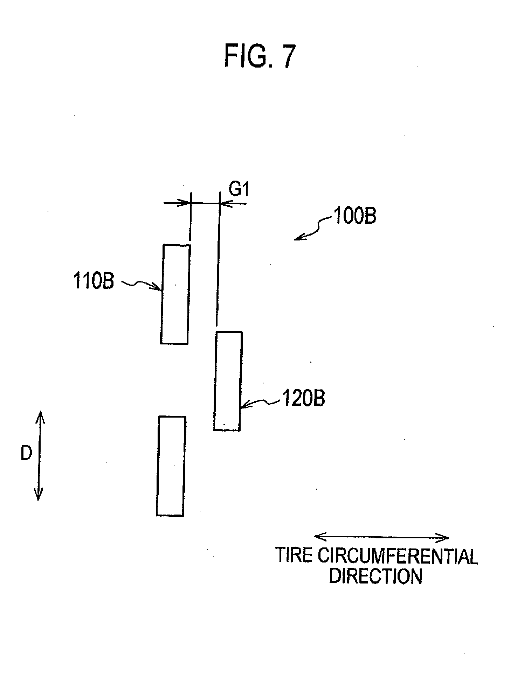

The second projection 120 in the aforementioned embodiment is adjacent to the first projection 110 in the tire circumferential direction, and a predetermined gap including width G is formed between the first projection 110 and the second projection 120. However, the present invention is not limited thereto, for example, a turbulent generating projection as shown in Fig. 7 may also be provided. Fig. 7 is a front view showing a projection 100B for turbulent flow generation of a pneumatic tire according to another embodiment of the present invention.

As shown in Fig. 7, the projection 100B for turbulent flow generation includes a first projection 110B and a second projection 120B, and a predetermined gap including a width G1 equivalent to the width of the first projection 110B may be formed between the first projection 110B and the second projection 120B.

The pneumatic tire 10 in the aforementioned embodiment is a tire filled with air or an inert gas, but it is not limited thereto, and for example, it may be a solid tire formed entirely with rubber.

The shape of the cross section of the projection 100 for turbulent flow generation perpendicularly intersecting in the direction in which the projection 100 for turbulent flow generation in the aforementioned embodiment is extending is rectangular, but it is not limited thereto, and for example, the shape may be triangular. In such a case, the second moment of area is calculated by the Equation $I = w \times h^3/32$. Therefore, it may be appropriate to set a length L along the tire radial direction D for the turbulent generating projection such that the relationship of $L^2 \leq 3.5 \times E \times I$ is satisfied.

Thus, even when the shape of the cross section of the turbulent generating projection is set to other than rectangular, by calculating the second moment of area corresponding to the shape of the cross section, the length L of the turbulent generating projection along the tire radial direction D can be set.

As described above, it is of course that the present invention includes various embodiments and the like not described here. Therefore, the technical range of the present invention is to be defined only by the inventive specific matter according to the adequate claims from the above description.

INDUSTRIAL APPLICABILITY

According to the present invention, it is possible to prevent the deformation of the projections for turbulent flow generation due to the oil content dispersed from outside while maintaining the heat dissipation effect of the tire side portion, and therefore, the present invention can be applied to a tire for construction vehicle that runs on an irregular ground and dirty road surface on many occasions.

REFERENCE NUMERALS

D···tire radial direction, θ···slant angle, θa···slant angle, CL ··· equatorial line, D···tire radial direction, G···width, G1···width, W···tread widthwise direction, 10···pneumatic tire, 20···tread, 21···carcass, 22··· belt layer, 30··· tire side portion, 40···bead, 100,100A,100B···turbulent generating projection, 100a···lower end, 110,110B···first projection, 110a ···end portion, 120,120B···second projection, 120a··· inside end portion, 120b···outside end portion, 130···third projection, 130b···outside end portion, 200···rim wheel, 210···rim flange, 210a···upper end

**Claims**

1.  A pneumatic tire (10) comprising turbulent generating projections (100) extending along a tire radial direction (D), on a tire side portion (30) positioned between a tread (20) and a bead (40), wherein
    the turbulent generating projections (100) include at least a first projection (110), a second projection (120) separate from the first projection (110), and a third projection (130) separate from the first projection (110) and the second projection (120),
    the first projection (110) and the third projection (130) are provided at the same position in a tire circumferential direction, and disposed separately having a predetermined gap,
    the second projection (120) is provided at a different position from the first projection (110) and the third projection (130) in the tire circumferential direction, and
    the end portion (110a) inside in the tire radial direction (D) of the first projection (110) overlaps the end portion (120b) outside in the tire radial direction (D) of the second projection (120) in the tire radial direction, and
    the end portion (130b) outside in the tire radial direction (D) of the third projection (130) overlaps the end portion (120a) inside in the tire radial direction (D) of the second projection (120) in the tire radial direction, wherein
    when a pitch of adjoining turbulent generating projections (100) in the tire circumferential direction is defined as P, a height of the adjoining turbulent generating projections (100) is defined as h, and a width in the tire circumferential direction of the adjoining turbulent generating projections (100) is defined as W, a relation of $1.0 \leq P/h \leq 50.0$ and $1.0 \leq (P-W)/W \leq 100.0$ is satisfied.

2.  The pneumatic tire (10) according to claim 1, wherein
    the second projection (120) is adjacent to the first projection (110) in the tire circumferential direction, and
    a predetermined gap (G) is formed between the first projection (110) and the second projection (120).

3.  The pneumatic tire (10) according to claim 2, wherein
    the second projection (120) is adjacent to the third projection (130) in the tire circumferential direction, and
    a predetermined gap is formed between the third projection (130) and the second projection (120).

4.  The pneumatic tire (10) according to claim 3, wherein the predetermined gap (G) is equal to or less than a width (W) of the turbulent generating projection (100) along the tire circumferential direction.

5.  The pneumatic tire (10) according to any one of claims 1 to 4, wherein a width of the turbulent generating projection (100) along the tire circumferential direction is 2 mm or more and 10 mm or less.

6.  The pneumatic tire (10) according to any one of claims 1 to 5, wherein a height (h) of the turbulent generating projection (100) is 3 mm or more and 25 mm or less.

7.  The pneumatic tire (10) according to any one of claims 1 to 6, wherein in a state when the pneumatic tire is assembled in a rim wheel (200), a distance from an upper end (210a) of a rim flange of the rim wheel up to a lower end (100a) of the turbulent projection (100) is 50 mm or more and 250 mm or less.

8.  The pneumatic tire (10) according to claim 6, wherein the height of the turbulent generating projection (100) is 10 mm or more and 25 mm or less.

9.  The pneumatic tire (10) according to any one of claims 1 to 7, wherein when L denotes a length of the turbulent generating projection (100) along the tire radial direction (D), E denotes a Young's modulus of a forming material that forms the turbulent generating projection (100), and I denotes a second moment of area of a cross section of the turbulent generating projection (100) perpendicularly intersecting in the direction in which the turbulent generating projection (100) is extending,

the turbulent generating projection (100) satisfies the relationship of $L^2 \leq 3.5 \times E \times I$.

10. The pneumatic tire (10) according to any one of claims 1 to 9, wherein the pneumatic tire (10) is a tire for heavy loads.

**Patentansprüche**

1. Luftreifen (10), der Turbulenzerzeugungsvorsprünge (100) umfasst, die sich entlang einer Reifenradialrichtung (D), auf einem Reifenseitenabschnitt (30), der zwischen einer Lauffläche (20) und einer Wulst (40) angeordnet ist, erstrecken, wobei

die Turbulenzerzeugungsvorsprünge (100) wenigstens einen ersten Vorsprung (110), einen von dem ersten Vorsprung (110) getrennten zweiten Vorsprung (120) und einen von dem ersten Vorsprung (110) und zweiten Vorsprung (120) getrennten dritten Vorsprung (130) einschließen,

der erste Vorsprung (110) und der dritte Vorsprung (130) an der in einer Reifenumfangsrichtung gleichen Position bereitgestellt werden und getrennt angeordnet sind, wobei sie einen vorbestimmten Spalt haben,

der zweite Vorsprung (120) an einer in der Reifenumfangsrichtung von dem ersten Vorsprung (110) und dem dritten Vorsprung (130) verschiedenen Position bereitgestellt wird und

der Endabschnitt (110a) des ersten Vorsprungs (110) auf der Innenseite in der Reifenradialrichtung (D) den Endabschnitt (120b) des zweiten Vorsprungs (120) auf der Außenseite in der Reifenradialrichtung (D) in der Reifenradialrichtung überlappt und

der Endabschnitt (130b) des dritten Vorsprungs (130) auf der Außenseite in der Reifenradialrichtung (D) den Endabschnitt (120a) des zweiten Vorsprungs (120) auf der Innenseite in der Reifenradialrichtung (D) in der Reifenradialrichtung überlappt, wobei

wenn eine Teilung der benachbarten Turbulenzerzeugungsvorsprünge (100) in der Reifenumfangsrichtung als P definiert ist, eine Höhe der benachbarten Turbulenzerzeugungsvorsprünge (100) als h definiert ist und eine Breite der benachbarten Turbulenzerzeugungsvorsprünge (100) in der Reifenumfangsrichtung als W definiert ist, eine Beziehung von $1{,}0 \leq P/h \leq 50{,}0$ und $1{,}0 \leq (P-W)/W \leq 100{,}0$ erfüllt ist.

2. Luftreifen (10) nach Anspruch 1, wobei
der zweite Vorsprung (120) dem ersten Vorsprung (110) in der Reifenumfangsrichtung benachbart ist,
ein vorbestimmter Spalt (G) zwischen dem ersten Vorsprung (110) und dem zweite Vorsprung (120) geformt ist.

3. Luftreifen (10) nach Anspruch 2, wobei
der zweite Vorsprung (120) dem dritten Vorsprung (130) in der Reifenumfangsrichtung benachbart ist, und
ein vorbestimmter Spalt zwischen dem dritten Vorsprung (130) und dem zweite Vorsprung (120) geformt ist.

4. Luftreifen (10) nach Anspruch 3, wobei der vorbestimmte Spalt (G) gleich einer Breite (W) des Turbulenzerzeugungsvorsprungs (100) entlang der Reifenumfangsrichtung oder geringer als dieselbe ist.

5. Luftreifen (10) nach einem der Ansprüche 1 bis 4, wobei eine Breite des Turbulenzerzeugungsvorsprungs (100) entlang der Reifenumfangsrichtung 2 mm oder mehr und 10 mm oder weniger beträgt.

6. Luftreifen (10) nach einem der Ansprüche 1 bis 5, wobei eine Höhe (h) des Turbulenzerzeugungsvorsprungs (100) 3 mm oder mehr und 25 mm oder weniger beträgt.

7. Luftreifen (10) nach einem der Ansprüche 1 bis 6, wobei in einem Zustand, in dem der Luftreifen in einem Felgenrad (200) montiert ist, ein Abstand von einem oberen Ende (210a) eines Felgenflanschs des Felgenrades hinauf zu einem unteren Ende (100a) des Turbulenzerzeugungsvorsprungs (100) 50 mm und mehr und 250 mm und weniger beträgt.

8. Luftreifen (10) nach Anspruch 6, wobei die Höhe des Turbulenzerzeugungsvorsprungs (100) 10 mm oder mehr und 25 mm oder weniger beträgt.

9. Luftreifen (10) nach einem der Ansprüche 1 bis 7, wobei, wenn L eine Länge des Turbulenzerzeugungsvorsprungs (100) entlang der Reifenradialrichtung (D) bezeichnet, E einen Elastizitätsmodul von Formmaterial, das den Turbulenzerzeugungsvorsprung (100) bildet, bezeichnet und I ein Flächenträgheitsmoment eines Querschnitts des Turbulenzerzeugungsvorsprungs (100), der senkrecht in der Richtung schneidet, in der sich der Turbulenzerzeugungsvorsprung (100) erstreckt, bezeichnet,
der Turbulenzerzeugungsvorsprung (100) die Beziehung von $L^2 \leq 3,5 \times E \times I$ erfüllt.

**10.** Luftreifen (10) nach einem der Ansprüche 1 bis 9, wobei der Luftreifen (10) ein Reifen für schwere Lasten ist.

**Revendications**

**1.** Bandage pneumatique (10), comprenant des saillies à génération de turbulence (100) s'étendant le long d'une direction radiale du bandage pneumatique (D), sur une partie latérale du bandage pneumatique (30) positionnée entre une bande de roulement (20) et un talon (40), dans lequel :

les saillies à génération de turbulence (100) englobent au moins une première saillie (110), une deuxième saillie (120) séparée de la première saillie (110), et une troisième saillie (130) séparée de la première saillie (110) et de la deuxième saillie (120) ;
la première saillie (110) et la troisième saillie (130) sont agencées au niveau de la même position dans une direction circonférentielle du bandage pneumatique, et sont agencées de manière séparée, à un espace prédéterminé ;
la deuxième saillie (120) est agencée au niveau d'une position différente de celle de la première saillie (110) et de la troisième saillie (130) dans la direction circonférentielle du bandage pneumatique ; et
la partie d'extrémité (110a), située à l'intérieur dans la direction radiale du bandage pneumatique (D) de la première saillie (110), chevauche la partie d'extrémité (120b), située à l'extérieur dans la direction radiale (D) du bandage pneumatique de la deuxième saillie (120) dans la direction radiale du bandage pneumatique, et la partie d'extrémité (130b), située à l'extérieur dans la direction radiale du bandage pneumatique (D) de la troisième saillie (130), chevauche la partie d'extrémité (120a), située à l'intérieur dans la direction radiale (D) du bandage pneumatique, de la deuxième saillie (120) dans la direction radiale du bandage pneumatique, dans lequel
lorsqu'un pas des saillies à génération de turbulence adjacentes (100) dans la direction circonférentielle du bandage pneumatique est défini comme correspondant à h, une largeur dans la direction circonférentielle du bandage pneumatique des saillies à génération de turbulence adjacentes (100) étant définie comme correspondant à W, une relation de $1,0 \leq P/h \leq 50,0$ et de $1,0 \leq (P-W)/W \leq 100,0$ est satisfaite.

**2.** Bandage pneumatique (10) selon la revendication 1, dans lequel :

la deuxième saillie (120) est adjacente à la première saillie (110) dans la direction circonférentielle du bandage pneumatique ; et
un espace prédéterminé (G) est formé entre la première saillie (110) et la deuxième saillie (120).

**3.** Bandage pneumatique (10) selon la revendication 2, dans lequel :

la deuxième saillie (120) est adjacente à la troisième saillie (130) dans la direction circonférentielle du bandage pneumatique ; et
un espace prédéterminé est formé entre la troisième saillie (130) et la deuxième saillie (120).

**4.** Bandage pneumatique (10) selon la revendication 3, dans lequel l'espace prédéterminé (G) est égal ou inférieur à une largeur (W) de la saillie à génération de turbulence (100) le long de la direction circonférentielle du bandage pneumatique.

**5.** Bandage pneumatique (10) selon l'une quelconque des revendications 1 à 4, dans lequel une largeur de la saillie à génération de turbulence (100) le long de la direction circonférentielle du bandage pneumatique correspond à 2 mm ou plus et à 10 mm ou moins.

**6.** Bandage pneumatique (10) selon l'une quelconque des revendications 1 à 5, dans lequel une hauteur (h) de la saillie à génération de turbulence (100) correspond à 3 mm ou plus et à 25 mm ou moins.

**7.** Bandage pneumatique (10) selon l'une quelconque des revendications 1 à 6, dans lequel, dans un état dans lequel le bandage pneumatique est assemblé sur une roue à jante (200), une distance entre une extrémité supérieure (210a) d'un rebord de jante de la roue à jante et une extrémité inférieure (100a) de la saillie à génération de turbulence (100) correspond à 50 mm ou plus et à 250 mm ou moins.

8. Bandage pneumatique (10) selon la revendication 6, dans lequel la hauteur de la saillie à génération de turbulence (100) correspond à 10 mm ou plus et à 25 mm ou moins.

9. Bandage pneumatique (10) selon l'une quelconque des revendications 1 à 7, dans lequel lorsque L désigne une longueur de la saillie à génération de turbulence (100) le long de la direction radiale (D) du bandage pneumatique, E désignant un module de Young d'un matériau de formation formant la saillie à génération des turbulence (100), I désignant un moment quadratique d'une section transversale de la saillie à génération de turbulence (10), à intersection perpendiculaire dans la direction d'extension de la saillie à génération de turbulence (100) ; la saillie à génération de turbulence (100) satisfait la relation de $L^2 \leq 3{,}5 \times E \times 1$.

10. Bandage pneumatique (10) selon l'une quelconque des revendications 1 à 9, dans lequel le bandage pneumatique (10) est un bandage pneumatique pour charges lourdes.

# FIG. 1

FIG. 2

# FIG. 3

FIG. 4

TIRE CIRCUMFERENTIAL DIRECTION

EP 2 711 203 B1

# FIG. 5

TIRE CIRCUMFERENTIAL
DIRECTION

# FIG. 6

TIRE CIRCUMFERENTIAL
DIRECTION

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007032405 A
- WO 2009029088 A
- GB 178496 A
- JP 11321243 A